# FASCICULE DE BREVET EUROPEEN

(11) **EP 2 372 864 B1**
(45) Date de publication et mention de la délivrance du brevet: **24.05.2017**
(21) Numéro de dépôt: 10305321.1
(22) Date de dépôt: 29.03.2010
(51) Int. Cl.: H02J 7/00, B60L 11/18

(54) **Système autonome de motorisation**
Autonomes Motorisierungssystem
Autonomous drive system

(43) Date de publication de la demande: 05.10.2011
(73) Titulaire: Gardes, Florian, 16340 L'Isle d'Espagnac (FR); Juan, Antoine, 16340 Champniers (FR); Penigaud, Jérôme, 33000 Bordeaux (FR)
(72) Inventeur: Gardes, Florian, 16340 L'Isle d'Espagnac (FR); Juan, Antoine, 16340 Champniers (FR); Penigaud, Jérôme, 33000 Bordeaux (FR)
(74) Mandataire: Hirsch & Associés

(56) Documents cités:
- EP-A2- 0 905 855
- WO-A1-2005/027345
- US-A- 5 780 980
- US-A1- 2004 201 365
- US-A1- 2005 122 071
- US-A1- 2006 255 755
- US-B1- 6 313 546

## Description

L'invention concerne un système autonome de motorisation électrique. Un tel système peut être utilisé dans une roue de véhicule ou dans un outil.

Un véhicule léger peut être équipé d'un système de motorisation électrique permettant de déplacer le véhicule sans effort, ou avec un effort limité de la part d'un utilisateur. Des systèmes de motorisation sont connus des fabricants de chariots électriques, vélos à assistance électrique, véhicules légers électriques ou hybrides.

Un tel système comprend un ou plusieurs moteurs électriques, un contrôleur qui assure le pilotage des moteurs électriques, une batterie composée d'accumulateurs constituant une réserve d'énergie électrique, et une commande assurant l'interface avec l'utilisateur et permettant d'agir sur le moteur.

Les documents WO-A-2004/050385, US-2006-255755, WO-A-03/030336 ou WO-A-03/097437 décrivent chacun un système de motorisation autonome comprenant un moteur, des accumulateurs, et un contrôleur montés dans un seul ensemble.

Le moteur d'un tel système autonome consomme une puissance électrique instantanée variable, qui dépend du besoin en puissance nécessaire à la traction du véhicule ou à l'utilisation de l'outil. La puissance consommée peut aller de zéro à plusieurs fois la puissance nominale du moteur électrique. Par exemple, dans le cas d'une application à un véhicule léger tel qu'un vélo ou une patinette, la puissance consommée lors d'une côte sera importante alors que la puissance consommée lors d'une descente sera nulle. De même, dans le cas d'une application à un outil telle qu'une perceuse, la puissance consommée lors de la pénétration dans un mur béton sera importante alors que la puissance consommée pour pénétrer dans un mur en plâtre sera faible.

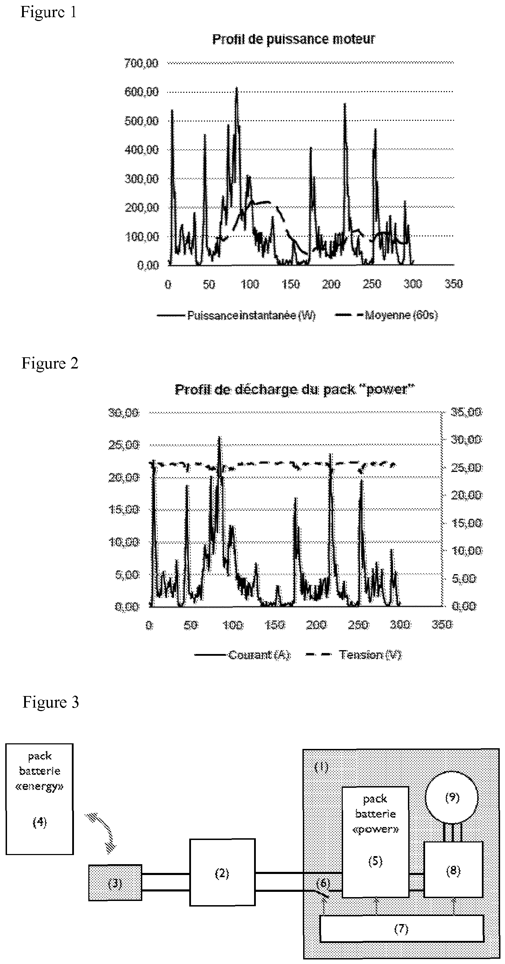

La figure 1 montre un graphe de la puissance électrique relevée sur une chaîne de traction d'un vélo électrique équipé d'un moteur de 175 Watts nominal sur une période de 5 minutes. La courbe en trait plein montre la puissance instantanée et la courbe en pointillés montre la puissance moyenne sur une minute. Dans l'exemple de la figure 1, la puissance instantanée varie de 0 à 600 Watts et la puissance moyenne est d'environ 100 Watts. Pour fonctionner de manière autonome, la chaîne de traction doit intégrer une batterie de puissance capable de fournir le courant maximum sollicité par le moteur.

La figure 2 montre un graphe du profil de décharge d'une batterie utilisée dans la chaîne de traction de la figure 1. Dans l'exemple, la batterie a une tension nominale de 24 Volts et fournit des pointes de courant dépassant les 25 Ampères. La puissance nécessaire à fournir par la batterie impose l'utilisation d'accumulateurs ayant un rapport puissance sur poids élevé (W/kg), dits accumulateurs de type puissance (ou «power cell» en terminologie anglaise). Ces accumulateurs sont capables de fournir des pointes de courant élevées mais offrent moins d'énergie que des accumulateurs dits de type énergie (ou «energy cell» en terminologie anglaise), c'est à dire ayant un rapport énergie sur poids élevé (Wh/kg), mais ne pouvant pas fournir de courants forts.

Les documents FR-A-2 909 325 ou GB-A-1 131 171 décrivent chacun un dispositif d'alimentation pour une machine électrique comprenant deux sources d'énergie. Une première source comprend des batteries et une deuxième source comprend une pile à combustible.

Le document FR-A-2 866 279 décrit un système d'entraînement des roues motrices d'un véhicule automobile à motorisation électrique comprenant deux chaînes de puissance complètes différentes. Chaque chaîne de motorisation comprend un moteur électrique et une batterie rechargeable, la puissance du moteur de la deuxième chaîne étant supérieure à la puissance du moteur de la première chaîne.

Le document FR-A-2 836 604 décrit un système d'alimentation électrique bi-tension pour véhicule automobile. Un réseau haute tension comprend une batterie haute tension et un réseau basse tension comprend une batterie basse tension. Le système comprend un convertisseur d'énergie électrique réversible agencé pour, dans un mode abaisseur, fournir de l'énergie électrique au réseau basse tension à partir de l'énergie électrique stockée dans la batterie haute tension, et pour, dans un mode élévateur, fournir de l'énergie électrique au réseau haute tension à partir de l'énergie électrique stockée dans la batterie basse tension.

Le document FR-A-2 790 148 décrit un système de stockage d'énergie qui comprend au moins deux branches disposées en parallèle, chaque branche comprenant au moins un générateur électrochimique, les branches étant de tensions nominales égales et de rapports puissance sur énergie différents.

Le document US-A-5 670 266 décrit un système de stockage d'énergie hybride comprenant une batterie rechargeable et une capacité. La capacité est adaptée à répondre aux besoins en puissance instantanée importante d'un dispositif électrique.

Les documents GB-A-2 275 378, DE-A-198 13 146, GB-A-1 476 011 ou GB-A-1 473 798 décrivent chacun une source de puissance comprenant une première batterie de type énergie et une deuxième batterie de type puissance.

Les dispositifs connus, comprenant une association de batteries de type puissance et de type énergie, ne sont pas bien adaptés à des systèmes autonomes de motorisation électrique pour véhicule léger ou pour outil. En effet, les dispositifs connus sont relativement lourds et encombrants et de maintenance complexe, notamment parce que les différents éléments du dispositif de la batterie ne sont pas dissociables facilement de l'engin ou de l'appareil équipé.

Il existe donc un besoin pour un système autonome de motorisation qui permette de répondre à la fois à des besoins de puissance élevée et des besoins d'autonomie important, tout en permettant une maintenance - notamment une recharge - facile et permettant l'utilisation de technologies non soumises à des restrictions de transport.

A cet effet l'invention propose un système autonome de motorisation comprenant un ensemble d'accumulateurs de type puissance associé à un moteur et un ensemble d'accumulateurs de type énergie amovible et transportable.

Plus particulièrement, l'invention propose un système autonome de motorisation selon la revendication 1.

Selon les modes de réalisation, le système autonome de motorisation selon l'invention peut comprendre une ou plusieurs de caractéristiques suivantes :
- le convertisseur à courant continu est adapté à contrôler la charge de l'ensemble d'accumulateurs de type puissance par l'ensemble d'accumulateurs de type énergie ;le système comprend en outre un organe de coupure commandé par l'unité centrale de contrôle et adapté à interrompre la charge de l'ensemble d'accumulateurs rechargeables électriquement de type puissance par l'ensemble d'accumulateurs rechargeables électriquement de type énergie ;
- l'organe de coupure est commandé de manière à charger la batterie de puissance avec un profil de charge pulsée ;
- le système comprend en outre un carter supportant et solidarisant l'ensemble d'accumulateurs rechargeables électriquement de type puissance, le moteur électrique, le contrôleur et l'unité centrale de contrôle ;
- le carter supporte en outre le convertisseur à courant continu ;
- le carter supporte en outre le socle adapté à recevoir l'ensemble d'accumulateurs rechargeables électriquement de type énergie ;
- le socle est adapté à recevoir une pluralité d'ensembles d'accumulateurs rechargeables électriquement de type énergie ;
- l'ensemble d'accumulateurs rechargeables électriquement de type puissance est de technologie Ni-MH ; le convertisseur à courant continu est alors de type sortie à courant constant ;
- l'ensemble d'accumulateurs rechargeables électriquement de type puissance est de technologie Lithium ; le convertisseur à courant continu est alors de type sortie à courant constant et à tension constante ;
- l'ensemble d'accumulateurs de type énergie rechargeables électriquement est de technologie Lithium ;
- la capacité de chaque ensemble d'accumulateurs rechargeables électriquement est inférieure ou égale à 100Wh.

L'invention se rapporte également à une roue de véhicule comprenant au moins un système autonome de motorisation selon l'une des revendications 1 à 13 ainsi qu'à un outil comprenant au moins un système autonome de motorisation selon l'une des revendications 1 à 13.

L'invention se rapporte également à un procédé de gestion d'un ensemble d'accumulateurs rechargeables électriquement selon la revendication 16.

D'autres caractéristiques et avantages de l'invention apparaîtront à la lecture de la description détaillée qui suit. Cette description est donnée à titre d'exemple uniquement, et en référence aux figures annexées qui montrent :
- figure 1, déjà décrite, un profil de puissance d'un système autonome de motorisation sur 5 minutes ;
- figure 2, déjà décrite, un profil de décharge d'un ensemble d'accumulateurs associé au système autonome de la figure 1 ;
- figure 3, un système autonome de motorisation selon un premier mode de réalisation de l'invention ;
- figure 4, un profil d'état de charge d'un ensemble d'accumulateurs de type puissance avec et sans association à un ensemble d'accumulateurs de type énergie ;
- figure 5, un profil d'état de charge d'un ensemble d'accumulateurs de type puissance et d'un ensemble d'accumulateurs de type énergie d'un système autonome de motorisation selon l'invention ;
- figure 6, profil de tension d'un ensemble d'accumulateurs de type puissance et d'un ensemble d'accumulateurs de type énergie d'un système autonome de motorisation selon l'invention ;
- figure 7, un système autonome de motorisation selon un deuxième mode de réalisation de l'invention ;
- figure 8, un système autonome de motorisation selon un troisième mode de réalisation de l'invention ;
- figure 9, un système autonome de motorisation selon un quatrième mode de réalisation de l'invention ;
- figure 10, un système autonome de motorisation selon un cinquième mode de réalisation de l'invention ;
- figure 11, un système autonome de motorisation selon un sixième mode de réalisation de l'invention.

Le système autonome de motorisation selon l'invention va être décrit en référence à la figure 3.

La figure 3 montre un carter 1 servant de support à un moteur électrique 9 et à un ensemble d'accumulateurs de type puissance, désigné par la suite batterie de puissance 5. La batterie de puissance 5 est adaptée à alimenter le moteur 9, par exemple à travers un contrôleur 8 qui pilote le fonctionnement du moteur, i.e. sens et vitesse de rotation notamment. Pour certaines applications dans lesquelles le moteur 9 ne tourne que dans un sens et à vitesse constante, le moteur 9 peut être commandé par un simple interrupteur actionné par un utilisateur ; le contrôleur 8 peut alors être un simple interrupteur de type marche/arrêt. Pour certaines applications, il n'est pas nécessaire de prévoir un carter 1 ; les éléments du système peuvent être intégrés directement dans un boîtier de l'application, tel que la coque d'un outil par exemple.

La figure 3 montre aussi une unité centrale de contrôle 7 qui supervise la gestion de la batterie de puissance 5 et pilote le moteur 9, à travers le contrôleur 8 le cas échéant. La figure 3 montre encore un ensemble d'accumulateurs de type énergie, désigné par la suite batterie d'énergie 4. La batterie d'énergie 4 est agencée de manière amovible sur un socle 3. Un convertisseur à courant continu 2 relie la batterie d'énergie 4 à la batterie de puissance 5. La figure 3 montre également un organe de coupure 6 piloté par l'unité centrale 7 et permettant d'interrompre la liaison électrique entre la batterie d'énergie 4 et la batterie de puissance 5.

Le moteur électrique 9 peut être de type courant continu sans balais (BLDC pour brushless DC motor en anglais) à aimants permanents. Ce moteur a l'avantage d'être silencieux en fonctionnement et de présenter une bonne durée de vie. Le carter 1 peut être en matériau isolant électrique et présenter des propriétés mécaniques qui permettent de garantir le maintien des éléments et la résistance aux contraintes mécaniques subies par le système, telles que des vibrations ou des chocs. Par exemple, le matériau du carter 1 peut être en ABS-PC (Acrylonitrile Butadiène Styrène / Polycarbonate) ou en un matériau composite. Le matériau du carter 1 peut également être en plastique contenant des charges (particules minérales par exemple) ou renforcé (par des fibres de verre par exemple).

La batterie de puissance 5 peut être de technologies Nickel Métal Hydrure de type puissance, ou de technologie Lithium de type puissance en intégrant les fonctions de protections appropriées. La batterie d'énergie 4 peut également être de technologie Lithium de type énergie et intégrer les fonctions de protections appropriées (i.e. fonction coupe-circuit et/ou sécurité en cas de surpression par exemple).

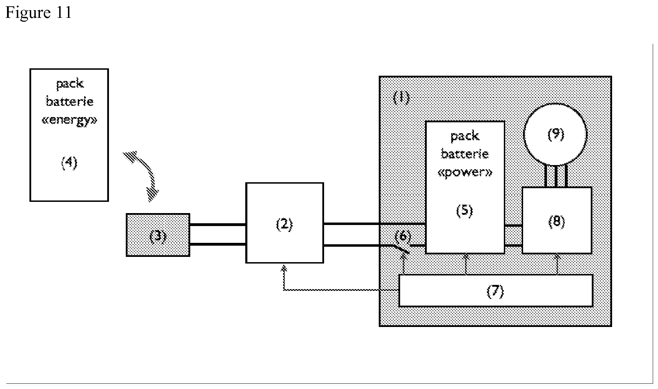

En fonctionnement, la batterie de puissance 5 fournit le courant instantané consommé par la le moteur 9 et reçoit un courant moyen de la batterie d'énergie 4 régulé par le convertisseur 2. Le convertisseur 2 assure que le courant fourni à la batterie de puissance 5 est sensiblement égal à la moyenne du courant consommé par le système sur une longue période. Le convertisseur 2 a un profil de sortie adapté à charger directement la batterie de puissance 5. La charge de la batterie de puissance par la batterie d'énergie peut être contrôlée par le convertisseur 2 ou par l'unité centrale 7. L'unité centrale 7 peut par exemple commander le convertisseur 2 (figure 11). L'unité centrale 7 peut également interrompre la charge de la batterie de puissance à tout moment via l'organe de coupure 6. L'unité centrale 7 est notamment adaptée à calculer l'état de charge (SOC = State of Charge) de la batterie de puissance 5 et à déterminer si celle-ci peut ou doit recevoir de l'énergie de la batterie d'énergie 4. En effet, selon le type de batterie utilisé, le contrôle de la charge est plus ou moins crucial. Par exemple, dans le cas d'accumulateurs de type Lithium, une surcharge peut conduire à une détérioration de l'accumulateur. L'unité centrale 7 peut également inclure un contrôle de l'équilibrage des accumulateurs de la batterie de puissance.

Dans un mode de réalisation, l'organe de coupure 6 peut être utilisé comme organe de protection de la batterie de puissance 5 ; l'unité centrale 7 commandant l'organe de coupure 6 lorsqu'elle détecte un fonctionnement de la batterie de puissance 5 en dehors des plages nominales et/ou lorsqu'un SOC de 100% est atteint. Dans un mode de réalisation, l'organe de coupure 6 peut être utilisé pour charger la batterie de puissance 5 avec un profil de charge pulsée, par exemple lors d'un équilibrage de charge.

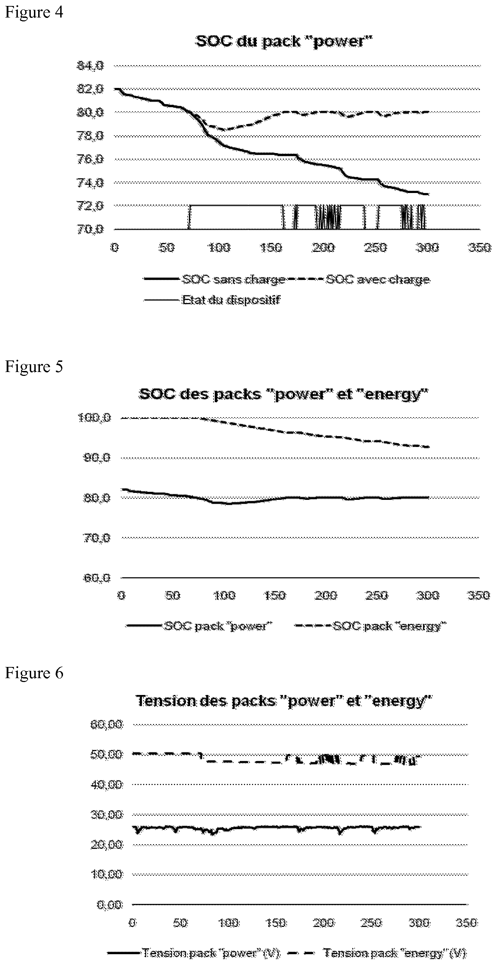

La figure 4 illustre l'état de charge SOC de la batterie de puissance 5. L'exemple de la figure 4 correspond au relevé de 5 minutes de fonctionnement du système illustré sur les figures 1 et 2, et montre le SOC de la batterie de puissance 5 sans recharge (courbe trait gras), le SOC de la batterie de puissance 5 avec recharge (courbe traits pointillés) et l'état actif ou inactif du dispositif de recharge (courbe trait fin). On remarque que l'état de charge de la batterie de puissance 5 sans recharge diminue rapidement. L'unité centrale 7 autorise la recharge de la batterie de puissance 5 par la batterie d'énergie 4 lorsque l'état de charge SOC est inférieur à un seuil défini, par exemple 80%.

La batterie de puissance 5 est chargée par la batterie d'énergie 4 à travers le convertisseur 2. Le convertisseur 2 est un convertisseur à courant continue. Il présente une caractéristique de sortie adaptée au type de batterie de puissance 5 intégrée au système.

Si la batterie de puissance 5 est de type Lithium, la sortie du convertisseur 2 est comparable à celle d'un chargeur de type CCCV (Constant Current / Constant Voltage ; courant constant / tension constante) avec une tension correspondant à la tension de charge de la batterie (typiquement 4,2 V par accumulateur). Si la batterie de puissance 5 est de type Ni-MH, la sortie du convertisseur 2 est de type CC (Constant Current ; alimentation à courant constant) avec un courant adapté au régime de charge des accumulateurs et une tension suffisante pour charger complètement la batterie (typiquement 1,6 V par accumulateur).

La figure 5 illustre les états de charge SOC de la batterie de puissance 5 (trait plein) et de la batterie d'énergie 4 (traits pointillés) et la figure 6 illustre les tensions aux bornes de la batterie de puissance 5 (trait plein) et de la batterie d'énergie 4 (traits pointillés).

L'état de charge de la batterie énergie diminue lorsqu'un courant est consommé sur la batterie énergie 4, convertit par le convertisseur 2 et utilisé pour recharger la batterie de puissance 5. Dans l'exemple de la figure 5, le relevé démarre avec une batterie d'énergie 4 chargée, c'est-à-dire un SOC à 100%. Le courant maximum de décharge de la batterie d'énergie 4 dépend du courant admissible par les accumulateurs qui la composent. Typiquement, les accumulateurs de type énergie peuvent être déchargés à un régime égal à 1 à 2 fois leur régime nominal (C) équivalent à une décharge en une heure, c'est à dire 2 à 4 Ampères pour une batterie de 2 Ah par exemple.

Le courant de charge de la batterie de puissance 5 est délivré par le convertisseur 2 et peut être supérieur au courant de décharge de la batterie d'énergie 4 si la tension de la batterie de puissance 5 est plus faible que la tension de la batterie d'énergie 4. Dans ce cas, le convertisseur 2 est de type «buck» ou abaisseur. La tension de la batterie énergie 4 peut également être plus faible que la tension de la batterie de puissance 5, dans ce cas le convertisseur 2 est de type «boost» ou élévateur.

Dans l'exemple des figures 5 et 6, la batterie d'énergie 4 est constituée d'accumulateurs de 2,2 Ah et présente une tension comprise entre 46 et 48 Volts en fonctionnement. La batterie de puissance 5 présente une tension d'environ 26 Volts. La batterie d'énergie 4 est déchargée à un courant de 3,3 Ampères (soit 1,5C ou 1,5 fois le régime nominal de la batterie) lorsque le système est actif. Le convertisseur 2 est de type «buck» avec un rendement de 95% ; le courant de charge reçu par la batterie de puissance 5 est d'environ 6 Ampères, et diminue au fur et à mesure de la décharge de la batterie d'énergie 4 car sa tension diminue.

Ainsi, le système selon l'invention permet de fournir à la batterie de puissance 5 un courant de recharge supérieur au courant moyen consommé par le moteur 9 à partir de l'énergie consommée sur une batterie d'énergie 4 qui ne pourrait pas à elle seule fournir la puissance instantanée demandée par la motorisation électrique. La batterie de puissance 5 intégrée au système n'est quasiment jamais déchargée, puisque l'énergie qu'elle fournie au moteur 9 est en moyenne compensée par l'énergie prélevée sur la batterie d'énergie 4.

La batterie énergie 4 est amovible ; elle peut ainsi être rechargée hors du système. La maintenance est simplifiée. Notamment, il est possible de remplacer une batterie d'énergie déchargée par une nouvelle batterie d'énergie 4 chargée, et cela facilement, rapidement et éventuellement sans interrompre le fonctionnement du système. En effet, le système autonome de motorisation peut fonctionner avec une autonomie réduite en l'absence de la batterie d'énergie 4, la batterie de puissance 5 étant dimensionnée pour fournir la puissance instantanée demandée par le moteur 9.

Il est également possible de recharger entièrement le système, c'est à dire la batterie de puissance 5 et la batterie d'énergie 4 installée sur le socle 3. Dans ce cas, un chargeur adapté à la batterie d'énergie 4 est branché en amont du convertisseur 2 pour la recharge de la batterie d'énergie 4 et permettre en même temps la recharge de la batterie de puissance 5 via le convertisseur 2.

De manière globale, seule la batterie d'énergie 4 est déchargée en utilisation et nécessite d'être rechargée ou remplacée lorsqu'elle est vide. Dans le système selon l'invention, la batterie d'énergie 4 est amovible et peut donc être dissociée de l'ensemble sans nécessiter d'outil ou d'opération complexe, et peut être connectée et déconnectée du système grâce à un connecteur électrique intégré au socle 3. L'amovibilité de la batterie d'énergie 4 permet de la recharger sur une station de charge indépendante du système, de remplacer immédiatement une batterie déchargée par une batterie chargée, ou encore d'utiliser plusieurs batteries successivement pour augmenter l'autonomie du système. Lors du remplacement de la batterie d'énergie 4, la batterie de puissance 5 peut assurer seule de manière ponctuelle l'alimentation du moteur 9, ce qui évite l'arrêt du système.

La batterie d'énergie 4 peut alors être dimensionnée avec une capacité suffisamment faible pour rester en dessous des seuils réglementaires de restriction de transport. La batterie d'énergie 4 est dimensionnée de manière à fournir la puissance moyenne demandée par le moteur 9 au lieu de la puissance maximum requise (dans l'exemple 100 Watts au lieu de 600 Watts). Ceci rend possible l'utilisation de batteries de plus petite puissance, mais également de plus petite énergie, donc de plus petite taille et plus légères. Lorsque la batterie d'énergie est de technologie soumise à des restrictions de transport (par exemple Lithium), la possibilité d'utiliser une batterie de petite capacité permet de rester en dessous du seuil réglementaire (par exemple 100 Wh pour les restrictions «Class 9» du Lithium) et de ne pas tomber sous couvert des restrictions.

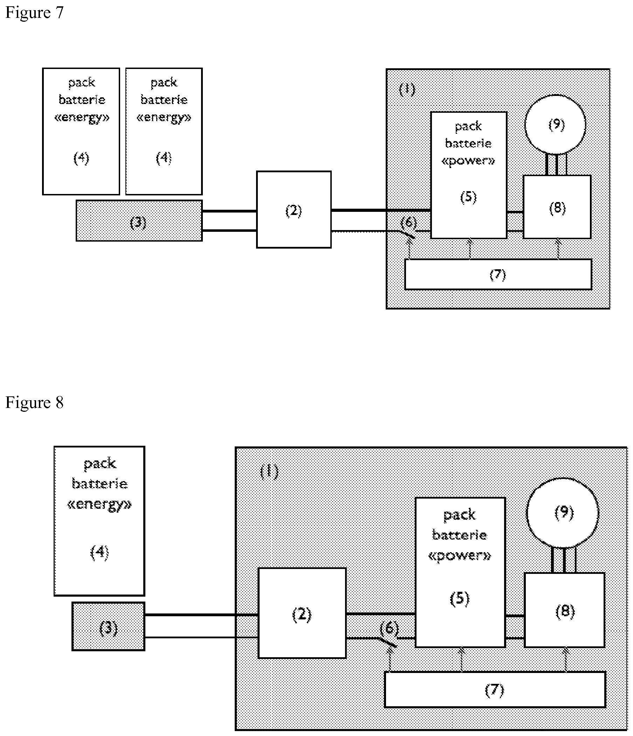

Les figures 7 à 10 illustrent différentes variantes de réalisation du système autonome de motorisation selon l'invention.

Selon le mode de réalisation de la figure 7, le socle 3 peut recevoir plusieurs batteries d'énergie 4 pour augmenter encore l'autonomie.

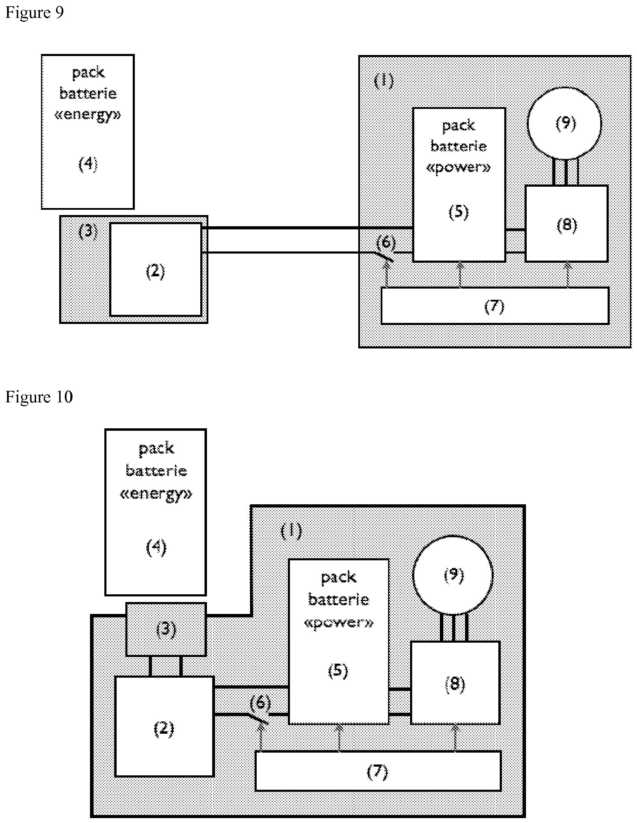

Selon le mode de réalisation de la figure 8, le convertisseur 2 est intégré au carter 1 et selon le mode de réalisation de la figure 9, le convertisseur 2 est intégré au socle 3 de la batterie d'énergie.

Selon le mode de réalisation de la figure 10, le socle 3 et le convertisseur 2 sont intégrés au carter 1.

Selon le mode de réalisation de la figure 11, l'unité centrale 7 commande le convertisseur 2, par exemple avec un dispositif de consigne. Dans ce mode de réalisation, le convertisseur 2 peut recevoir des consignes de l'unité centrale 7 de manière à adapter sa sortie à la charge de la batterie de puissance 5. Les fonctions de contrôle et d'interruption de charge peuvent alors être totalement assurées par pilotage du convertisseur 2 par l'unité centrale 7. L'organe de coupure 6 peut être conservé pour assurer une sécurité redondante.

Le système de motorisation selon l'invention peut être intégré à une roue d'un véhicule.

Par exemple, le carter 1 peut être solidaire d'un châssis du véhicule et un axe entraîné par le moteur 9 peut alors être solidaire de la roue. La roue peut être entraînée en rotation par l'intermédiaire de l'axe mis en rotation par le moteur électrique 9, le carter 1 restant fixe. Dans un autre exemple, l'axe entraîné par le moteur est solidaire du châssis du véhicule et le carter 1 est solidaire à la roue. La roue peut être entraînée en rotation par l'intermédiaire du carter 1 mis en rotation par le moteur électrique 9. De préférence, les éléments supportés par le carter 1 sont répartis de manière à éviter un effet de ballant lors de la mise en rotation. Par exemple, les éléments peuvent être disposés autour de l'axe d'entraînement, de sorte que le centre de gravité du système se trouve au centre du carter 1.

Le système autonome de motorisation peut-être installé dans de nombreux objets, par exemple dans un véhicule léger tel qu'un vélo, une patinette, une brouette, un brancard ou autre ; ou encore dans un outil tel qu'une perceuse ou autre.

Dans le cas d'un vélo à assistance électrique équipé d'une chaîne de traction avec un moteur de 250 Watts, la batterie de puissance doit fournir des pointes de puissance jusqu'à 1 kW, et la puissance moyenne consommée est de 150 W.

Sur un système classique de motorisation, la chaîne de traction est composée d'un moteur et une batterie amovible qui doit être capable de fournir seule la puissance demandée par le moteur.

Selon le système de motorisation de l'invention, la chaîne de traction autonome est composée d'un moteur 9 et d'une batterie de puissance 5 capable de fournir la puissance demandée par le moteur. Le système comprend en outre un dispositif de recharge avec batterie d'énergie 4 amovible capable de fournir la puissance moyenne demandée par la chaîne de traction.

Dans le système classique, une batterie unique de 200 Wh doit être utilisée pour alimenter le moteur. Cette batterie est de taille et poids importants, est difficile à transporter et nécessite généralement pour être installée un cadre de vélo spécialement adapté étant donné son encombrement. De plus, si la batterie est de type Lithium, elle est soumise aux restrictions de transport «Class 9» qui imposent des conditions de conditionnement et de transport contraignantes relatives aux produits dangereux.

Dans le système selon l'invention, la chaîne de traction autonome peut être alimentée par deux batteries de 100 Wh amovibles, compactes et légères. Le carter 1 comprenant le moteur 9 et la batterie de puissance 5 peut être agencé sur la roue et le cadre doit prévoir un logement pour la batterie d'énergie 4. Cette batterie d'énergie 4 est capable à elle seule de recharger la batterie de puissance 5 et présente un encombrement minimum et ne nécessite pas d'adaptation du cadre. Plusieurs batteries d'énergie 4 peuvent être utilisées de manière successive, l'une pouvant être rechargée pendant qu'une autre est utilisée, et leur transport est facilité par leur faible encombrement. Si les batteries sont de type Lithium, elles ne sont pas soumises aux restrictions de transport «Class 9».

Le système selon l'invention améliore donc de manière très significative la facilité du transport de l'énergie nécessaire à la propulsion d'un vélo à assistance électrique : chaque batterie est d'une taille comparable à une batterie d'ordinateur portable et n'est pas soumise aux restrictions de transport. La maintenance d'un tel système est en outre facilitée par la possibilité de dissocier la batterie d'énergie de l'ensemble du système.

Bien entendu, la présente invention n'est pas limitée aux modes de réalisation décrits à titre d'exemple.

## Revendications

1. Système autonome de motorisation comprenant :
- au moins un moteur électrique (9) ;
- un contrôleur (8) adapté à piloter le fonctionnement du moteur électrique (9) ;
- un ensemble d'accumulateurs rechargeables électriquement de type puissance (5);
- un socle (3) adapté à recevoir, de manière amovible sans nécessité d'outil, un ensemble d'accumulateurs rechargeables électriquement de type énergie (4) ;
- un convertisseur à courant continu (2);
- une unité centrale de contrôle (7) adaptée à commander le convertisseur à courant continu (2),
ledit système autonome de motorisation étant **caractérisé en ce que** :
- l'ensemble d'accumulateur rechargeables électriquement de type puissance (5) est adapté à alimenter le moteur (9) en fournissant le courant instantané consommé par le moteur (9), l'ensemble d'accumulateurs rechargeables électriquement de type puissance (5) étant capable de fournir le courant maximum sollicité par le moteur (9),
- le convertisseur à courant continu est adapté à relier l'ensemble d'accumulateurs rechargeables électriquement de type énergie (4) à l'ensemble d'accumulateurs rechargeables électriquement de type puissance (5) pour assurer la charge de l'ensemble d'accumulateurs rechargeables électriquement de type puissance (5) par l'ensemble d'accumulateurs rechargeables électriquement de type énergie (4) en fournissant à l'ensemble d'accumulateurs rechargeables électriquement de type puissance (5), un courant de charge compensant en moyenne l'énergie fournie au moteur (9).

2. Système autonome de motorisation selon l'une quelconque des revendications précédentes comprenant en outre un organe de coupure (6) commandé par l'unité centrale de contrôle (7) et adapté à interrompre la charge de l'ensemble d'accumulateurs rechargeables électriquement de type puissance (5) par l'ensemble d'accumulateurs rechargeables électriquement de type énergie (4).

3. Système autonome de motorisation selon la revendication 2 dans lequel l'organe de coupure (6) est commandé de manière à charger la batterie de puissance (5) avec un profil de charge pulsée.

4. Système autonome de motorisation selon l'une quelconque des revendications précédentes comprenant en outre un carter (1) supportant et solidarisant l'ensemble d'accumulateurs rechargeables électriquement de type puissance (5), le moteur électrique (9), le contrôleur (8) et l'unité centrale de contrôle (7).

5. Système autonome de motorisation selon la revendication 4 dans lequel le carter (1) supporte en outre le convertisseur à courant continu (2).

6. Système autonome de motorisation selon les revendications 4 ou 5 dans lequel le carter (1) supporte en outre le socle (3) adapté à recevoir l'ensemble d'accumulateurs rechargeables électriquement de type énergie (4).

7. Système autonome de motorisation selon l'une quelconque des revendications précédentes dans lequel le socle (3) est adapté à recevoir une pluralité d'ensembles d'accumulateurs rechargeables électriquement de type énergie (4).

8. Système autonome de motorisation selon l'une quelconque des revendications 1 à 7 dans lequel l'ensemble d'accumulateurs rechargeables électriquement de type puissance (5) est de technologie Ni-MH.

9. Système autonome de motorisation selon la revendication 8 dans lequel le convertisseur à courant continu (2) est de type sortie à courant constant (CC).

10. Système autonome de motorisation selon l'une quelconque des revendications 1 à 7 dans lequel l'ensemble d'accumulateurs rechargeables électriquement de type puissance (5) est de technologie Lithium.

11. Système autonome de motorisation selon la revendication 10 dans lequel le convertisseur à courant continu (2) est de type sortie à courant constant et à tension constante (CCCV).

12. Système autonome de motorisation selon l'une quelconque des revendications précédentes dans lequel l'ensemble d'accumulateurs rechargeables électriquement de type énergie (4) est de technologie Lithium.

13. Système autonome de motorisation selon l'une quelconque des revendications précédentes dans lequel la capacité de chaque ensemble d'accumulateurs rechargeables électriquement (4, 5) est inférieure ou égale à 100Wh.

14. Roue de véhicule comprenant au moins un système autonome de motorisation selon l'une des revendications 1 à 13.

15. Outil comprenant au moins un système autonome de motorisation selon l'une des revendications 1 à 13.

16. Procédé de gestion d'un ensemble d'accumulateurs rechargeables électriquement de type puissance d'un système autonome de motorisation selon l'une de revendications 1 à 13, le procédé étant **caractérisé en ce qu'**il comprend :
- la fourniture par l'ensemble d'accumulateurs rechargeables électriquement de type puissance (5) de tout courant instantané consommé par le moteur (9) ;
- la charge de l'ensemble d'accumulateurs rechargeables électriquement de type puissance (5) par un courant de charge compensant en moyenne l'énergie fournie au moteur (9), le convertisseur (2) convertissant un courant consommé sur l'ensemble d'accumulateurs rechargeables électriquement de type énergie (4) en le courant de charge reçu par l'ensemble d'accumulateurs rechargeables électriquement de type puissance (5).

## Patentansprüche

1. Autonomes Motorisierungssystem, das Folgendes umfasst:
- mindestens einen Elektromotor (9),
- eine Steuervorrichtung (8), die angepasst ist, um den Betrieb des Elektromotors (9) zu steuern,
- eine Gruppe von elektrisch wiederaufladbaren Akkumulatoren des Leistungstyps (5),
- einen Sockel (3), der angepasst ist, um, ohne Benötigung eines Werkzeugs, abnehmbar eine Gruppe von elektrisch wiederaufladbaren Akkumulatoren des Energietyps (4) aufzunehmen,
- einen DC/DC-Wandler (2),
- eine Steuerzentraleinheit (7), die angepasst ist, um den DC/DC-Wandler (2) zu steuern,
wobei das autonome Motorisierungssystem **dadurch gekennzeichnet ist, dass**:
- die Gruppe von elektrisch wiederaufladbaren Akkumulatoren des Leistungstyps (5) angepasst ist um den Motor (9) zu speisen, durch Lieferung des von dem Motor (9) verbrauchten Momentanstroms, wobei die Gruppe von elektrisch wiederaufladbaren Akkumulatoren des Leistungstyps (5) in der Lage ist, den, von dem Motor (9) geforderten Maximalstrom zu liefern,
- der DC/DC-Wandler angepasst ist, um die Gruppe von elektrisch wiederaufladbaren Akkumulatoren des Energietyps (4) mit der Gruppe von elektrisch wiederaufladbaren Akkumulatoren des Leistungstyps (5) zu verbinden, um das Aufladen der elektrisch wiederaufladbaren Akkumulatoren des Leistungstyps (5) durch die Gruppe von elektrisch wiederaufladbaren Akkumulatoren des Energietyps (4) sicherzustellen, indem der Gruppe von elektrisch wiederaufladbaren Akkumulatoren des Leistungstyps (5) ein Ladestrom geliefert wird, der im Durchschnitt die an den Motor (9) gelieferte Energie ausgleicht.

2. Autonomes Motorisierungssystem nach irgendeinem der vorhergehenden Ansprüche, das außerdem ein Ausschaltorgan (6) umfasst, das von der Steuerzentraleinheit (7) gesteuert wird und angepasst ist, um das Aufladen der Gruppe von elektrisch wiederaufladbaren Akkumulatoren des Leistungstyps (5) durch die Gruppe von elektrisch wiederaufladbaren Akkumulatoren des Energietyps (4) zu unterbrechen.

3. Autonomes Motorisierungssystem nach Anspruch 2, wobei das Ausschaltorgan (6) so gesteuert ist, dass die Leistungsbatterie (5) mit einem gepulsten Lastprofil aufgeladen wird.

4. Autonomes Motorisierungssystem nach irgendeinem der vorhergehenden Ansprüche, das außerdem ein Gehäuse (1) umfasst, das die Gruppe von elektrisch wiederaufladbaren Akkumulatoren des Leistungstyps (5), den Elektromotor (9), die Steuervorrichtung (8) und die Steuerzentraleinheit (7) trägt und fest verbindet.

5. Autonomes Motorisierungssystem nach Anspruch 4, wobei das Gehäuse (1) außerdem den DC/DC-Wandler (2) trägt.

6. Autonomes Motorisierungssystem nach Anspruch 4 oder 5, wobei das Gehäuse (1) außerdem den Sockel (3) trägt, der angepasst ist, um die Gruppe von elektrisch wiederaufladbaren Akkumulatoren des Energietyps (4) aufzunehmen.

7. Autonomes Motorisierungssystem nach irgendeinem der vorhergehenden Ansprüche, wobei der Sockel (3) angepasst ist, um eine Vielzahl von Gruppen von elektrisch wiederaufladbaren Akkumulatoren des Energietyps (4) aufzunehmen.

8. Autonomes Motorisierungssystem nach einem der Ansprüche 1 bis 7, wobei die Gruppe von elektrisch wiederaufladbaren Akkumulatoren des Leistungstyps (5) die Ni-MH-Technologie verwendet.

9. Autonomes Motorisierungssystem nach Anspruch 8, wobei der DC/DC-Wandler (2) vom Typ Konstantstromausgang (CC) ist.

10. Autonomes Motorisierungssystem nach einem der Ansprüche 1 bis 7, wobei die Gruppe von elektrisch wiederaufladbaren Akkumulatoren des Leistungstyps (5) die Lithium-Technologie verwendet.

11. Autonomes Motorisierungssystem nach Anspruch 10, wobei der DC/DC-Wandler (2) vom Typ Konstantstromausgang und konstanter Spannung (CCCV) ist.

12. Autonomes Motorisierungssystem nach irgendeinem der vorhergehenden Ansprüche, wobei die Gruppe von elektrisch wiederaufladbaren Akkumulatoren des Energietyps (4) die Lithium-Technologie verwendet.

13. Autonomes Motorisierungssystem nach irgendeinem der vorhergehenden Ansprüche, wobei die Kapazität jeder Gruppe von elektrisch wiederaufladbaren Akkumulatoren (4, 5) kleiner oder gleich 100 Wh ist.

14. Fahrzeugrad, das mindestens ein autonomes Motorisierungssystem nach einem der Ansprüche 1 bis 13 umfasst.

15. Werkzeug, das mindestens ein autonomes Motorisierungssystem nach einem der Ansprüche 1 bis 13 umfasst.

16. Verfahren zum Verwalten einer Gruppe von elektrisch wiederaufladbaren Akkumulatoren des Leistungstyps eines autonomen Motorisierungssystems nach einem der Ansprüche 1 bis 13, wobei das Verfahren **dadurch gekennzeichnet ist, dass** es Folgendes umfasst:
- das Liefern durch die Gruppe von elektrisch wiederaufladbaren Akkumulatoren des Leistungstyps (5) des gesamten Momentanstroms, der von dem Motor (9) verbraucht wird,
- das Aufladen der Gruppe von elektrisch wiederaufladbaren Akkumulatoren des Leistungstyps (5) durch einen Ladestrom, der im Durchschnitt die Energie, die an den Motor (9) geliefert wird, ausgleicht, den Wandler (2), der einen auf der Gruppe von elektrisch wiederaufladbaren Akkumulatoren des Energietyps (4) aufgenommenen Strom in den Ladestrom umwandelt, der von der Gruppe von elektrisch wiederaufladbaren Akkumulatoren des Leistungstyps (5) empfangen wird.

## Claims

1. A self-contained motorization system comprising:
- at least one electric motor (9);
- a controller (8) adapted to control the operation of the electric motor (9);
- a set of electrically-chargeable accumulators of power type (5);
- a base (3) adapted for removably receiving, without the need for a tool, a set of electrically-chargeable accumulators of energy type (4);
- a direct current converter (2);
- a central control unit (7) adapted to control the direct current converter (2);
said autonomous motorization system being **characterized in that**:
- the set of electrically-chargeable accumulators of power type (5) is adapted to supply the motor (9) by supplying the instantaneous current consumed by the motor (9), the set of electrically-chargeable accumulators of power type (5) being capable of supplying the maximum current demanded by the motor (9),
- the direct current converter is adapted to connect the set of electrically-chargeable accumulators of the energy type (4) to the set of electrically-chargeable accumulators of power type (5) to ensure the charging of the set of electrically-chargeable accumulators of power type (5) by the set of electrically-chargeable accumulators of the energy type (4) by supplying to the set of electrically-chargeable accumulators of power type (5) a charging current which on average compensates the power supplied to the motor (9).

2. The self-contained motorization system according to any one of the preceding claims, also comprising a cutoff member (6) commanded by the central control unit (7) and adapted to interrupt the charge of the set of electrically-chargeable accumulators of power type (5) by the set of electrically-chargeable accumulators of energy type (4).

3. The self-contained motorization system according to claim 2, wherein the cutoff member (6) is commanded so as to charge the set of electrically-chargeable accumulators of power type (5) with a pulsed charge profile.

4. The self-contained motorization system according to any one of the preceding claims, also comprising a case (1) bearing and standing together the set of electrically-chargeable accumulators of power type (5), the electric motor (9), the controller (8), and the central control unit (7).

5. The self-contained motorization system according to claim 4, wherein the case (1) also bears the direct current converter (2).

6. The self-contained motorization system according to claim 4 or 5, wherein the case (1) also bears the base (3) adapted to receive the set of electrically-chargeable accumulators of energy type (4).

7. The self-contained motorization system according to any one of the preceding claims, wherein the base (3) is adapted to receive a plurality of sets of accumulators of energy type (4).

8. The self-contained motorization system according to any one of claims 1 to 7, wherein the set of electrically-chargeable accumulators of power type (5) uses the Ni-MH technology.

9. The self-contained motorization system according to claim 8, wherein the direct current converter (2) is of the constant current (CC) output type.

10. The self-contained motorization system according to any one of claims 1 to 7, wherein the set of electrically-chargeable accumulators of power type (5) uses the Lithium technology.

11. The self-contained motorization system according to claim 10, wherein the direct current converter (2) is of the constant current output and constant voltage output (CCCV) type.

12. The self-contained motorization system according to any one of the preceding claims, wherein the set of electrically-chargeable accumulators of energy type (4) uses the Lithium technology.

13. The self-contained motorization system according to any one of the preceding claims, wherein the capacity of each set of electrically-chargeable accumulators (4, 5) is less than or equal to 100 Wh.

14. A vehicle wheel comprising at least one self-contained motorization system according to one of claims 1 to 13.

15. A tool comprising at least one self-contained motorization system according to one of claims 1 to 13.

16. A method for managing the charge of a set of electrically-chargeable accumulators of power type of a self-contained motorization system according to one of claims 1 to 13, the method being **characterized in that** it comprises:
- the supply by the set of electrically-chargeable accumulators of power type (5) of all instantaneous current consumed by the motor (9);
- charging the set of electrically-chargeable accumulators of power type (5) with a charging current compensating on average the power supplied to the motor (9), the converter (2) converting a current consumed over the set of electrically-chargeable accumulators of energy type (4) into the charging current received by the set of electrically-chargeable accumulators of power type (5).
